# EUROPÄISCHE PATENTANMELDUNG

(11) **EP 2 238 823 A1**
(43) Veröffentlichungstag der Anmeldung: **13.10.2010**
(21) Anmeldenummer: 10001693.0
(22) Anmeldetag: 19.02.2010
(51) Int. Cl.: A01D 78/10

(54) **Heuwerbungsmaschine**

(30) Priorität: 08.04.2009 DE 102009016519
(71) Anmelder: CLAAS Saulgau GmbH, 88348 Bad Saulgau (DE)
(72) Erfinder: Frick, Clemens, 88356 Ostrach (DE); Loebe, Stefan, 88348 Bad Saulgau (DE); Maucher, Hubert, 88411 Bad Wurzach (DE)

(57) **Zusammenfassung**

Heuwerbungsmaschine mit einem Verstellmechanismus zum Verstellen des Abstands zwischen dem Zinkenarme (5) aufnehmenden Kreiselkörper (2) und den die Rechkreisel (1) abstützenden Stützrädern (8) des Fahrwerks (7), zum Zusammenrechen von am Boden liegendem landwirtschaftlichen Erntegut, mit wenigstens einem, um eine vertikale Achse umlaufend angetriebenen auf Stütz- und Tasträdern (8) am Boden abgestützten Rechkreisel (1), welcher von einer Kurvenbahn (9) gesteuerte Rechzinken (6) aufweist, wobei der Rechkreisel (1) einen Verstellantrieb zur Höhenverstellung der Rechzinken (6) beinhaltet, wobei der Rechkreisel (1) eine Steuereinheit (40) umfasst, bestehend wenigstens aus einem Stellzylinder (24) und einem Sensor (30) als Wegaufnehmer, welcher den Verschiebeweg (W) der Kolbenstange (23) des Stellzylinders (24) erfasst.

## Beschreibung

### Beschreibung

Die Erfindung betrifft eine Heuwerbungsmaschine zum Zusammenrechen von am Boden liegenden landwirtschaftlichen Erntegut gemäß dem Oberbegriff des unabhängigen Anspruchs 1.

### Stand der Technik

Bekannt sind Heuwerbungsmaschinen, ausgebildet als Kreiselschwader mit umlaufend angetriebenen von einer Kurvenbahn gesteuerten Rechzinken, welche das am Boden liegende Erntegut zu einem Schwad zusammenrechen. Die Rechkreisel sind mit einem handbetätigten oder motorisch betätigten Stellmittel ausgestattet, welches dazu dient, den Abstand der Zinkenspitzen der Rechzinken gegenüber dem Boden verändern bzw. einstellen zu können. Bekannt sind elektrisch oder hydraulisch angetriebene Stellmotoren, die eine Spindel betätigen, und die eine Relativbewegung zwischen dem, die Zinkenarme aufnehmendem Kreiselkörper und dessen Schwadgetriebe und den die Rechkreisel abstützenden Stützrädern eines Fahrwerks bewirken können. Ebenso bekannt sind Stellelemente, ausgebildet als Hydraulikzylinder, die eine Verschiebung des Fahrwerks längs der Kolbenstange des Hydraulikzylinders bewirken, welches ebenfalls eine Relativbewegung zwischen dem, die Zinkenarme aufnehmendem Kreiselkörper und dessen Schwadgetriebe, und den die Rechkreisel abstützenden Stützrädern eines Fahrwerks bewirken kann. Beide Arten von Stellmitteln bewirken im Ergebnis eine Veränderung des Abstands der Zinkenspitzen gegenüber dem Boden.

Diese Relativbewegung erzeugt praktisch eine vertikale Höhenverlagerung des die Zinkenarme aufnehmenden Kreiselkörpers relativ zum Fahrwerk und damit zugleich relativ zur Aufstandsebene des Bodens, auf dem sich das Fahrwerk abstützt. Wenn der gewünschte Zinkenspitzenabstand gegenüber dem Boden erreicht ist, wird der Stellantrieb blockiert, so dass der eingestellte Abstand konstant bleibt. Umfasst die Heuwerbungsmaschine bzw. der Kreiselschwader mehrere Rechkreisel, so muss dieser Stellvorgang an jedem Rechkreisel wiederholt werden. Dabei sind Ausführungen derartiger Stellantriebe bekannt, die fernverstellbar von einer zentralen Steuerung aus der Fahrerkabine eines Traktors heraus betätigt werden können.

### Aufgabenstellung

Hier setzt die Erfindung an, mit dem Ziel, eine Steuerung für derartige Verstellmechanismen zum Verstellen der Rechhöhe, d.h. des Abstands der Zinkenspitzen gegenüber dem Boden und damit zugleich des Abstands zwischen dem die Zinkenarme aufnehmendem Kreiselkörper und den die Rechkreisel abstützenden Stützrädern des Fahrwerks weiter zu entwickeln. Darin enthalten ist gleichermaßen das Ziel, die Transporteigenschaften der Heuwerbungsmaschine zu verbessern.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Indem das Verstellmittel zur Verstellung der Rechhöhe der Zinkenspitzen des Kreiselrechens als Hydraulikzylinder mit einer beidseitig aus dem Zylindergehäuse austretenden durchgehenden Kolbenstange ausgebildet ist, ist es erfindungsgemäß möglich, dass das freie Ende der Kolbenstange mit einem Winkelcodierer derart gekoppelt ist, dass die lineare Bewegung der Kolbenstange in Form einer Drehbewegung auf den Winkelcodierer übertragen wird.

Dieses macht es möglich, dass der Steuerung zur Betätigung der Rechhöhenverstellung ein Eingangssignal zur Verfügung gestellt wird, welches dem Bediener Auskunft über die momentan eingestellte Höhe auf seinem Bedienterminal gibt. Dieses stellt zugleich eine besonders einfache und kostengünstige Lösung eines Messwerterfassungssystems zur Erfassung der Rechhöhe der Zinkenspitzen dar, da sowohl Hydraulikzylinder als auch Winkelcodierer kostengünstige Bauelemente ihrer Gattung darstellen.

In einer weiteren Ausgestaltung der Erfindung ist die Steuerung als zentrale Steuerung für alle Rechkreisel einer Heuwerbungsmaschine der genannten Art ausgebildet. Besonders vorteilhaft ist es, wenn die Steuerung dabei mit einem µ-Prozessor ausgestattet ist und das Ausgangsignal des Winkelcodierers dabei direkt als digitalisiertes Ausgangsignal ausgegeben wird. In einer weiteren vorteilhaften Ausgestaltung der Erfindung ist die Steuerung mit einem BUS-System, oder auch beispielsweise mit einem Landwirtschaftlichen BUS-System, beispielsweise LBS oder ISO-BUS, gekoppelt und steht mit einem Bedienterminal der zentralen Steuerung oder der Benutzerstation (User-Station) des LBS oder ISO-BUS in der Kabine des Fahrers in Wirkverbindung.

Eine weitere Ausgestaltung der Erfindung sieht vor, dass beim Hochklappen der Rechkreisel die Rechzinken automatisch auf minimalem Bodenabstand eingestellt werden, bzw., dass in der Endstellung als Transportstellung der Abstand zwischen dem Zinkenarme aufnehmendem Kreiselkörper und den, die Rechkreisel abstützenden Stützrädern des Fahrwerks, automatisch auf den Mindestabstand eingefahren ist, welches zur Folge hat, dass zugleich die minimale Bauhöhe des Rechkreisels erreicht ist. Dieses hat zur Folge, dass im hochgeklappten Zustand der Rechkreisel zugleich seine minimale Transportbreite einnimmt.

Eine weitere Ausgestaltung der Erfindung sieht eine Memory-Steuerung für die Zinkenabstände gegenüber dem Boden vor, so dass beispielsweise beim Abklappen der Rechkreisel die Rechzinken automatisch auf den zuletzt eingestellten Bodenabstand wieder eingestellt werden. Ebenfalls erfindungsgemäß vorgesehen ist dabei die Hinterlegung eines Clusters für die Zinkenabstände, wobei der Fahrer fernbedienbar aus der Kabine für alle Rechkreisel mit einem einzigen Tastendruck den Zinkenabstand zum Boden aus diesem Cluster auswählen kann, und die Anpassung an diesen vorgewählten Zinkenabstand dann automatisch erfolgt.

Bei der Heuwerbungsmaschine nach der Erfindung kann es sich sowohl um eine einkreiselige als auch um eine mehrkreiselige Heuwerbungsmaschine handeln.

Gleichermaßen kann es sich dabei um Heuwerbungsmaschinen handeln, die ihren oder ihre Rechkreisel in eine Transportstellung hochklappen, so dass die Kreiselachse(n) der Rechkreisel im Transportzustand überwiegend waagerecht verlaufen oder aber die Rechkreisel werden lediglich vom Boden angehoben, so dass die Kreiselachse(n) des oder der Rechkreisel im Transportzustand überwiegend waagerecht verlaufen. Im letzteren Fall ist es alternativ möglich, dass der Kreiselkörper nunmehr seinen größtmöglichen Bodenabstand automatisch gesteuert einnimmt, um eine möglichst große Bodenfreiheit gegenüber den Zinkensspitzen einzunehmen.

An Hand des nachfolgend dargestellten Ausführungsbeispiels wird die Erfindung näher dargestellt und erläutert:

Es zeigen:
- Fig.1: Schnittdarstellung durch einen Rechkreisel nach der Erfindung
- Fig.1a: Einzelheit X gemäß Fig.1
- Fig.1b: Einzelheit Y gemäß Fig.1
- Fig.2: Kreiselkörper gemäß Fig.1 losgelöst vom Fahrwerk gemäß Fig. 1
- Fig.3: Fahrwerk gemäß Fig.1 losgelöst vom Kreiselkörper gemäß Fig. 1
- Fig.4: vergrößerte Darstellung der Kreisellagerung gemäß Fig.1
- Fig.5: Winkelsensor in einer anderen Stellposition gegenüber Fig. 1b
- Fig.6 a: Darstellung der Blockbauweise eines Steuergerätes zur Höhenverstellung

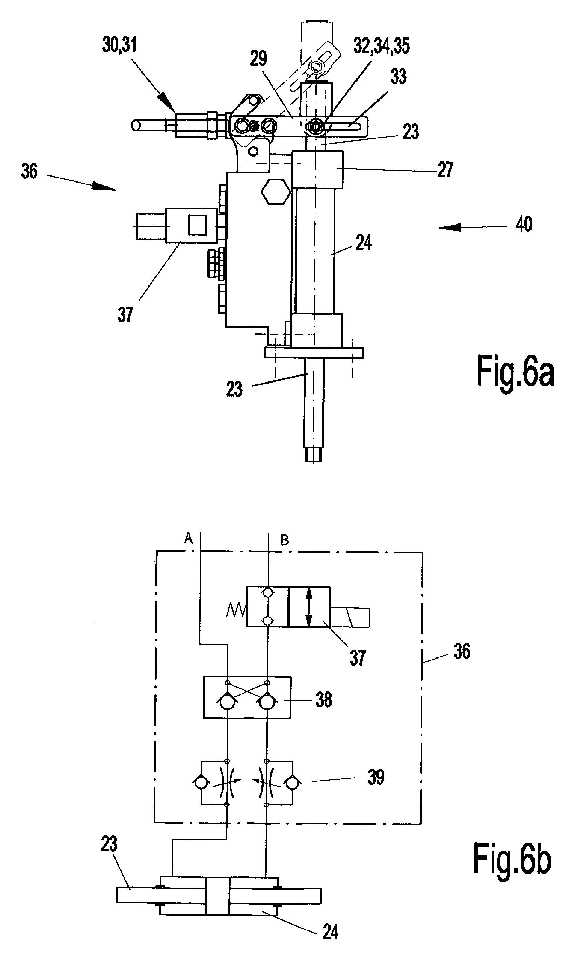

- Fig.6 b: hydraulischer Schaltplan

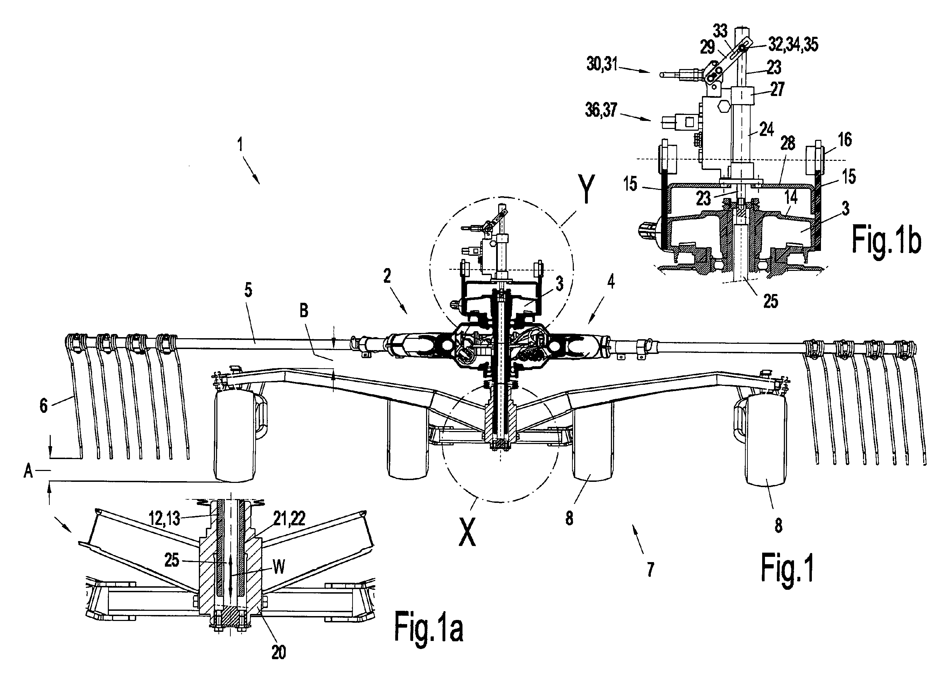

In den Figurendarstellungen Fig.1 bis Fig.6b sind nähere Einzelheiten der Erfindung dargestellt.

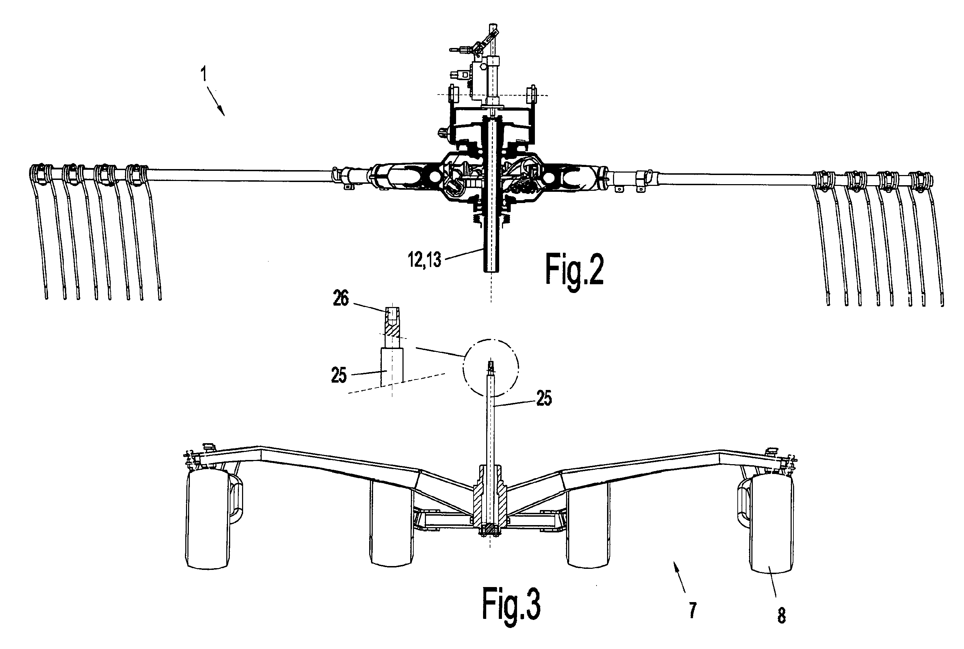

Fig. 1 zeigt einen dem Fachmann an sich bekannten Rechkreisel 1 einer Heuwerbungsmaschine, ausgebildet als Rechkreisel 1 mit Kreiselkörper 2, Schwadgetriebe 3, Schwaderglocke 4, Zinkenarmen 5 mit Rechzinken 6 und Fahrwerk 7 mit den Tast- und Stützrädern 8, ausgebildet als mit Achsschenkelbolzen aufweisenden Nachlaufrädern 8. Der Kreiselkörper 2 beinhaltet die Schwadglocke 4 aufnehmende Kurvenbahn 9 und die Lagerstellen 10 der Zinkenarme 5, welche von Rollenhebeln 11, welche in die Kurvenbahn 9 eingreifend während ihres Umlaufs um die feststehende Kreiselachse 12, ausgebildet als Hohlachse 13, die drehfest mit dem Schwadgetriebegehäuse 14 verbunden ist, gesteuert werden. Die Kreiselachse 12 ist somit fest mit dem Gehäuse 14 des Schwadgetriebes 3 verbunden, wobei das Schwadgetriebe 3 selber mittels der Aufnahmelaschen 15, welche Lagerbuchsen 16 aufnehmen, schwenkbar in bekannterweise mit nicht näher dargestellten Auslegerarmen mit dem Maschinengestell der Heuwerbungsmaschine verbunden ist. Der Kreiselkörper 2 ist auf der Kreiselachse 12 drehbar in Wälzlagern 17,18 gelagert, so dass dieser samt seinen Zinkenarmen 5, von einem Kegelradgetriebe, welches im Gehäuse 14 des Schwadgetriebes 3 gelagert ist, und dessen Tellerrad 19 drehfest mit der Schwaderglocke 4 verbunden ist, umlaufend angetrieben wird. Des besseren Verständnisses wegen wurden in den Figuren Fig.2 der Kreiselkörper 2 gemäß Fig.1 losgelöst vom Fahrwerk 7 gemäß Fig. 1 und in Fig.3 das Fahrwerk 7 gemäß Fig.1 losgelöst vom Kreiselkörper 2 gemäß Fig. 1 dargestellt.

Fig.1a zeigt die Einzelheit X gemäß Fig.1 und damit einen Teil des Fahrwerks 7 in einer Schnittdarstellung. Das Fahrwerk 7 ist mit einer Profilbuchse 20 mit Profilinnenverzahnung 21 ausgestattet, welche auf der Kreiselachse 12 in die Profilaußenverzahnung 22 längsverschieblich innerhalb eines Verschiebewegs W eingreift.

Mit dem Fahrwerk 7 drehfest verschraubt ist ein in der Betriebsstellung aufrecht stehender Schaft 25, der die als Hohlachse 13 ausgebildete Kreiselachse 12 in Längsrichtung durchstreckt. Der Schaft 25 ist an seinem oberen freien Ende mit der Kolbenstange 23 eines Hydraulikzylinders 24, ausgebildet als Stellzylinder 24 zum Verschieben des Fahrwerks 7 innerhalb des Verschiebewegs W, mittels einer Schraubverbindung 26 zwischen Schaft 25 und Kolbenstange 23, wobei der Schafts 25 ein Sacklochgewinde 26 aufweist, verschraubt. Die durchgehende Kolbenstange 23 ist oberhalb des Stellzylinders 24 mit einem Sensor bzw. Wegaufnehmer 30, ausgebildet als Winkelcodierer 31 , verbunden.

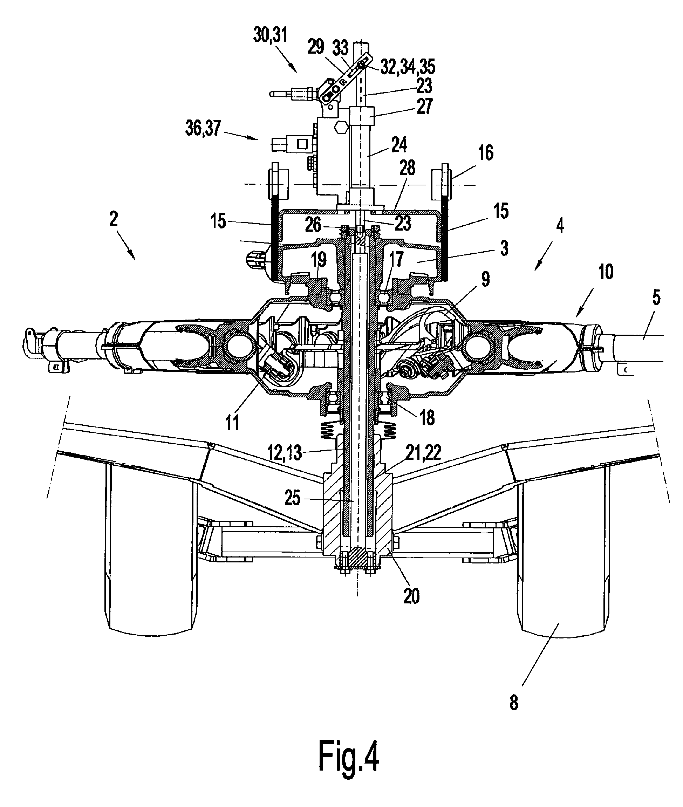

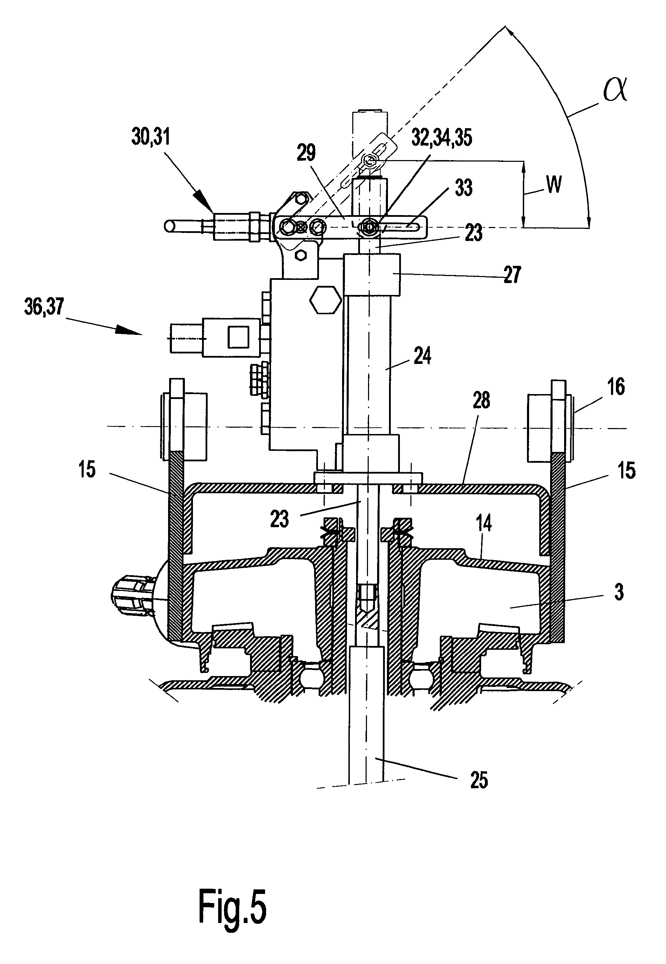

Diese Einzelheiten des Stellzylinders 24, des Wegaufnehmers 30, bzw. des Winkelcodierers 31 und deren Anbindung an den Schaft 25 gehen aus der Schnittdarstellung gemäß Fig.1, Fig.4 und. Fig.5 in vergrößertem Maßstab genauer hervor. Die Kolbenstange 23 ist als durchgehende Kolbenstange ausgebildet und tritt oberhalb des Hydraulikzylindergehäuses 27 aus diesem aus. Der Hydraulikzylinder 24 stützt sich dabei an einer Traverse 28, welche sich wiederum über die Aufnahmelaschen 15 an dem Gehäuse 14 des Schwadgetriebes 3 abstützt.

Das obere Ende der Kolbenstange 23 ist mittels einer Kulissenführung 32 mit einem drehbaren Hebelarm 29 auf der drehbaren Welle 32 eines Sensors 30, ausgebildet als Winkelcodierer 31, gelagert. Die Kulissenführung 32 besteht aus einem Langloch 33, in dem ein Kulissenstein 34, ausgebildet als Rolle 35, die fest mit der Kolbenstange 23 verbunden ist, geführt ist. Somit kann der Verschiebeweg W der Kolbenstange 23 und damit zugleich der Verschiebeweg W des Fahrwerks 7 direkt in einen Drehwinkel α des Hebelarms 29 des Wegaufnehmers 30 bzw. des Winkelcodierers 31 umgesetzt werden.
Fig.6 a zeigt den Aufbau und die Darstellung der Blockbauweise eines Steuergerätes zur Höhenverstellung eines Rechkreisels nach der Erfindung und
Fig.6 b zeigt ein Ausführungsbeispiel eines dazugehörigen hydraulischen Schaltplans

Der Hydraulikzylinder 24 als Stellzylinder, der Sensor 30 als Wegaufnehmer, ausgebildet als Winkelcodierer 31, und der hydraulische Steuerblock 36 bilden eine vormontierte Einheit als Steuergerät 40 in Blockbauweise. Der hydraulische Steuerblock 36 zum Ansteuern des Hydraulikzylinders 24 ist direkt an diesem angeschraubt und der Wegaufnehmer 30 bzw. Winkelcodierer 31 ist direkt an dem Steuerblock 36 angeschraubt, so dass diese eine Einheit bilden. Vorteilhafter weise ist der Sensor 30 bzw. der Wegaufnehmer 30 busfähig und Teil einer Steuereinrichtung mit einem µ-Prozessor, so dass der Wegaufnehmer 30 ein digitales Ausgangssignal erzeugt, welches einem µ-Prozessor als Eingangssignal über das BUS-System direkt zugeführt werden kann.

Der Steuerblock 36 umfasst ein elektrisch betätigbares Wegeventil 37, welches beispielsweise auch als Proportionalwegeventil ausgebildet sein kann , welches aber unabhängig davon vorzugsweise BUS-fähig ausgebildet ist. Weiterhin beinhaltet der Steuerblock 36 integrierte entsperrbare Rückschlagventile 37 zur Lagefixierung der Kolbenstange 23. Der hydraulische Schaltplan dazu ist in Fig. 6 dargestellt. Somit bilden der Hydraulikzylinder 24, der Wegaufnehmer 30, der Steuerblock 36 mit dem Wegeventil 37, dem entsperrbaren Rückschlagventil 38 und dem Drosselrückschlagventil 39 zur sensiblen Einstellung der Betätigungsbewegung der Kobenstange 23 als Ganzes gesehen eine Baueinheit.

Fig. 5 zeigt den Sensor zur Lageerfassung, ausgebildet als Winkelcodierer, mit einer momentan eingestellten Rechhöhe A in einer anderen Stellposition gegenüber Fig. 1b bzw. in Fig.4. Um das Abstandsmaß A der Rechhöhe verändern zu können wird der Stellzylinder 24 druckbeaufschlagt und die Kolbenstange entsprechend verschoben, wodurch sich zugleich auch das Abstandsmaß B zwischen dem Kreiselkörper 2 des Rechkreisels 1 und dem Fahrwerk 7 des Rechkreisels verändert hat. Dieser Effekt lässt sich zugleich nutzen, um das Fahrwerk im hochgeklappten Transportzustand so eng wie möglich an den Kreiselkörper 2 heran zu ziehen, um damit die Transportbreite der gesamten Heuwerbungsmaschine während der Straßenfahrt möglichst gering zu halten.

Alternativ ist es aber genau möglich bei einer Heuwerbungsmaschine nach der Erfindung, deren Rechkreisel während der Transportfahrt auf dem Fahrwerk 7 laufen, den Bodenabstand A der Zinkenspitzen zu maximieren, indem dann umgekehrt das Abstandsmaß B zwischen Kreiselkörper 2 und Fahrwerk 2 nicht minimiert, sondern dann maximiert wird.

Die Steuereinrichtung zur Höhenverstellung des Rechkreisels ist als zentrale Steuerung mit einem Bedienterminal ausgerüstet und aus der Fahrerkabine eines Traktors heraus fernbedienbar ausgestaltet. In besonders vorteilhafter Wiese weit die Steuerung eine hinterlegte Clusterung für den anwählbaren Sollwert des Verstellwegs des Stellzylinders auf.

Über einen von dem Bedienterminal aus zentral ausgelöstem Steuerbefehl können alle Rechkreisel 1 in eine Transportstellung derart überführt werden, dass das Abstandsmaß B zwischen dem jeweiligen Kreiselkörper und dem zugehörigen Fahrwerk in eine der beiden möglichen Endlagen, automatisch minimal oder alternativ maximal wird. In einer weiteren Ausgestaltung der zentralen Steuereinrichtung ist es möglich dass per zentral ausgelöstem Steuerbefehl alle Rechkreisel 1 einer Heuwerbungsmaschine nach der Erfindung in eine Arbeitsstellung derart überführt werden, dass das Abstandsmaß B zwischen dem jeweiligen Kreiselkörper und dem zugehörigen Fahrwerk den zuletzt gespeicherten Wert automatisch wieder einnimmt.

Grundsätzlich ist es auch möglich, dass die Steuerung Bestandteil eines Landwirtschaftlichen BUS-Systems (LBS oder ISO-Bus) ist und dass das Bedienterminal gleichzeitig die zentrale Benutzerstation (User-Station) des Landwirtschaftlichen BUS-Systems (LBS oder ISO-Bus) ist.

### Bezugszeichenliste

- 1: Rechkreisel
- 2: Kreiselkörper
- 3: Schwadgetriebe
- 4: Schwaderglocke
- 5: Zinkenarme
- 6: Rechzinken
- 7: Fahrwerk
- 8: Tast- und Stützrad
- 9: Kurvenbahn
- 10: Lagerstelle
- 11: Rollenhebel
- 12: Kreiselachse
- 13: Hohlachse
- 14: Schwadgetriebegehäuse
- 15: Aufnahmelaschen
- 16: Lagerbuchsen
- 17: Wälzlager
- 18: Wälzlager
- 19: Tellerrad
- 20: Profilbuchse
- 21: Profilinnenverzahnung
- 22: Profilaußenverzahnung
- 23: Kolbenstange
- 24: Hydraulikzylinder, Stellzylinder
- 25: feststehender Schaft
- 26: Schraubverbindung, Sacklochgewinde
- 27: Hydraulikzylindergehäuse
- 28: Traverse
- 29: Hebelarm
- 30: Sensor, Wegaufnehmer
- 31: Winkelcodierer
- 32: Kulissenführung
- 33: Langloch
- 34: Kulissenstein
- 35: Rolle
- 36: hydraulischer Steuerblock
- 37: Wegeventil
- 38: entsperrbares Rückschlagventil
- 39: Drosselrückschlagventil
- 40: Steuereinheit
- A: Abstandmaß, Bodenabstand
- B: Abstandmaß
- W: Verschiebeweg
- α: Drehwinkel

## Patentansprüche

1. Heuwerbungsmaschine mit einem Verstellmechanismus zum Verstellen des Abstands zwischen dem Zinkenarme aufnehmenden Kreiselkörper und den die Rechkreisel abstützenden Stützrädern des Fahrwerks, zum Zusammenrechen von am Boden liegenden landwirtschaftlichen Erntegut, mit wenigstens einem, um eine vertikale Achse umlaufend angetriebenen auf Stütz- und Tasträdern am Boden abgestützten Rechkreisel, welcher von einer Kurvenbahn gesteuerte Rechzinken aufweist, wobei der Rechkreisel einen Verstellantrieb zur Höhenverstellung der Rechzinken beinhaltet, **dadurch gekennzeichnet, dass** der Rechkreisel (1) eine Steuereinheit (40) umfasst, bestehend wenigstens aus einem Stellzylinder (24) und einen Sensor (30) als Wegaufnehmer, welcher den Verschiebeweg (W) der Kolbenstange (23) des Stellzylinders (24) erfasst.

2. Heuwerbungsmaschine nach Anspruch 1, **dadurch gekennzeichnet, dass** die Kolbenstange (23) mit dem Sensor (30) gekoppelt ist.

3. Heuwerbungsmaschine nach Anspruch 1, **dadurch gekennzeichnet, dass** der Sensor (30) als Winkelcodierer (31) ausgebildet ist.

4. Heuwerbungsmaschine nach Anspruch 1, **dadurch gekennzeichnet, dass** der Stellzylinder (24) eine durchgehende Kolbenstange (23) aufweist.

5. Heuwerbungsmaschine nach Anspruch 1, **dadurch gekennzeichnet, dass** die Kolbenstange (23) außerhalb des Stellzylinders (24) mit dem Winkelcodierer gekoppelt ist.

6. Heuwerbungsmaschine nach Anspruch 1, **dadurch gekennzeichnet, dass** der Sensor (30) ein digitales Ausgangssignal erzeugt.

7. Heuwerbungsmaschine nach Anspruch 1, **dadurch gekennzeichnet, dass** der Sensor (30) ein digitales Eingangssignal für einen µ-Prozessor erzeugt.

8. Heuwerbungsmaschine nach Anspruch 1, **dadurch gekennzeichnet, dass** die Steuereinrichtung einen µ-Prozessor umfasst.

9. Heuwerbungsmaschine nach Anspruch 1 bis 8, **dadurch gekennzeichnet, dass** die Steuereinrichtung ein BUS-System aufweist.

10. Heuwerbungsmaschine nach Anspruch 1 bis 8, **dadurch gekennzeichnet, dass** die Steuereinrichtung eine zentrale Steuerung mit einem Bedienterminal aufweist.

11. Heuwerbungsmaschine nach Anspruch 1 bis 8, **dadurch gekennzeichnet, dass** die zentrale Steuerung aus der Fahrerkabine eines Traktors heraus fernbedienbar ist.

12. Heuwerbungsmaschine nach Anspruch 1 bis 8, **dadurch gekennzeichnet, dass** die Steuerung eine hinterlegte Clusterung für den anwählbaren Sollwert des Verstellwegs des Stellzylinders aufweist.

13. Heuwerbungsmaschine nach Anspruch 1 bis 8, **dadurch gekennzeichnet, dass** die Steuereinrichtung so ausgestaltet ist, dass per zentral ausgelöstem Steuerbefehl alle Rechkreisel (1) in eine Transportstellung derart überführt werden, dass das Abstandsmaß (B) zwischen dem jeweiligen Kreiselkörper und dem zugehörigen Fahrwerk in eine der beiden möglichen Endlagen, automatisch minimal oder alternativ maximal wird.

14. Heuwerbungsmaschine nach Anspruch 1 bis 8, **dadurch gekennzeichnet, dass** die Steuereinrichtung so ausgestaltet ist, dass per zentral ausgelöstem Steuerbefehl alle Rechkreisel (1) in eine Arbeitsstellung derart überführt werden, dass das Abstandsmaß (B) zwischen dem jeweiligen Kreiselkörper und dem zugehörigen Fahrwerk den zuletzt gespeicherten Wert automatisch einnimmt.

15. Heuwerbungsmaschine nach Anspruch 1 bis 14, **dadurch gekennzeichnet, dass** die zentrale Steuerung Bestandteil eines Landwirtschaftlichen BUS-Systems (LBS oder ISO-Bus) ist.

16. Heuwerbungsmaschine nach Anspruch 15, **dadurch gekennzeichnet, dass** das Bedienterminal gleichzeitig die Benutzerstation (User-Station) des Landwirtschaftlichen BUS-Systems (LBS oder ISO-Bus) ist.
